# EUROPEAN PATENT APPLICATION

(11) **EP 4 729 486 A1**
(43) Date of publication of application: **22.04.2026**
(21) Application number: 25206439.9
(22) Date of filing: 02.10.2025
(51) Int. Cl.: C01G 53/42

(54) **METHOD FOR PREPARING POSITIVE ELECTRODE ACTIVE MATERIALS, POSITIVE ELECTRODE ACTIVE MATERIALS, POSITIVE ELECTRODES, AND RECHARGEABLE LITHIUM BATTERIES**

(30) Priority: 11.10.2024 KR 20240138901
(71) Applicant: SAMSUNG SDI CO., LTD., Yongin-si, Gyeonggi-do 17084 (KR)
(72) Inventor: CHOO, Sungho, 17084 Yongin-si (KR); CHANG, Donggyu, 17084 Yongin-si (KR); JANG, Jungsue, 17084 Yongin-si (KR); AN, Jisang, 17084 Yongin-si (KR); PARK, Jingyu, 17084 Yongin-si (KR); LEE, Jiho, 17084 Yongin-si (KR)
(74) Representative: Marks & Clerk LLP

(57) **Abstract**

A method for preparing a positive electrode active material includes (i) preparing core particles including a lithium nickel-based composite oxide; (ii) adding the core particles to an aqueous solvent and mixing them to prepare a first mixed solution, and adjusting pH of the first mixed solution to a range between about 5.5 and about 7.5; (iii) adding an aluminium raw material to the first mixed solution and mixing them to prepare a second mixed solution; and (iv) removing the aqueous solvent from the second mixed solution to prepare a dried product. Also disclosed is a positive electrode active material prepared by the above method, a positive electrode comprising said positive electrode active material, and a rechargeable lithium battery comprising said positive electrode.

## Description

### BACKGROUND

### 1. Field

The present invention relates to methods for preparing positive electrode active materials, positive electrode active materials, positive electrodes including the positive electrode active materials, and rechargeable lithium batteries including the positive electrodes.

### 2. Description of the Related Art

Portable electronic (information) devices (such as a cell phone, a laptop, a smart phone, and/or the like) and/or electric vehicles utilize rechargeable lithium batteries (e.g., as driving power sources) due to their high energy density and easy portability. Recently, there has been active research into utilizing rechargeable lithium batteries with high energy density as driving power sources for hybrid and electric vehicles as well as power storage sources for energy storage systems.

Various positive electrode active materials have been investigated for utilization in (to realize) rechargeable lithium batteries for such applications. Among them, lithium nickel-based composite oxides, lithium nickel manganese cobalt-based composite oxides, lithium nickel cobalt aluminium-based composite oxides, and lithium cobalt-based composite oxides are mainly or predominantly utilized as positive electrode active materials. With the growing demand for large-capacity, high-energy-density rechargeable lithium batteries, there is a need or desire to develop positive electrode active materials that improve or enhance both (e.g., simultaneously) stability and performance.

### SUMMARY

One or more aspects of the present invention are directed toward a method for preparing a positive electrode active material, which may include a lithium nickel-based composite oxide. The method may improve or enhance the performance of a rechargeable lithium battery, for example, under high-temperature and high-voltage conditions, by introducing an improved (e.g., enhanced/suitable) coating layer. As a result, the positive electrode active material may exhibit enhanced capacity characteristics, improved or enhanced initial charge/discharge efficiency, and superior high-temperature cycle-life performance.

Additional aspects will be set forth in part in the description which follows and, in part, will be apparent from the description or may be learned by practice of the presented embodiments of the disclosure.

In a first aspect, the present invention provides a method for preparing a positive electrode active material, the method including the steps of: (i) preparing core particles including a lithium nickel-based composite oxide; (ii) adding the core particles to an aqueous (e.g., water-soluble) solvent and mixing them (e.g., the core particles and the aqueous solvent) to prepare a first mixed solution, and adjusting the pH of the first mixed solution to a range between about 5.5 and about 7.5; (iii) adding an aluminium raw material to the first mixed solution and mixing them (e.g., the aluminium raw material and the first mixed solution) to prepare a second mixed solution; and (iv) removing an aqueous (e.g., water-soluble) solvent from the second mixed solution to prepare a dried product.

Ina second aspect, the present invention provides a positive electrode active material prepared according to the method of the first aspect of the invention.

In a third aspect, the present invention provides a positive electrode including a positive electrode current collector, and a positive electrode active material layer on the positive electrode current collector, wherein the positive electrode active material layer includes the aforementioned positive electrode active material of the second aspect of the invention.

In a fourth aspect, the present invention provides a rechargeable lithium battery including the aforementioned positive electrode of the third aspect of the invention; a negative electrode; and an electrolyte.

The positive electrode active material and the rechargeable lithium battery that are prepared by using the method for preparing the positive electrode active material according to one or more embodiments may exhibit high initial charge/discharge capacity and initial charge/discharge efficiency even under high-voltage driving conditions and may implement long cycle-life characteristics under high-voltage and high-temperature conditions.

For example, the improved or enhanced electrochemical performance of the positive electrode active material and the rechargeable lithium battery, as described herein, may be attributed to the structural and compositional characteristics imparted during the preparation process. For example, the formation of a uniform (e.g., substantially uniform) aluminium-containing coating layer under controlled pH conditions may enhance the thermal and chemical stability of the active material surface. The presence of aluminium on a surface of the dried product, in a concentration ranging from about 35 atomic percent (at%) to about 45 at% relative to the total a total metal excluding lithium (e.g., based on a total of 100 at% of nickel, cobalt, and aluminium), may contribute to improved or enhanced resistance to electrolyte decomposition and surface degradation at elevated voltages. Furthermore, the inclusion of chlorine in an amount of at least 0.1 weight percent (wt%) may facilitate the formation of a stable interface between the active material and the electrolyte. These features may collectively support the high initial charge/discharge capacity, improved or enhanced initial charge/discharge efficiency, and extended cycle life observed under high-temperature and high-voltage operating conditions.

At least some of the above and other features of the invention are set out in the claims.

### BRIEF DESCRIPTION OF THE DRAWINGS

The accompanying drawings, together with the specification, illustrate embodiments of the subject matter of the present invention, and, together with the description, serve to explain principles of embodiments of the subject matter of the present invention.
FIGS. 1-4 each is a schematic view illustrating rechargeable lithium batteries according to one or more embodiments.
FIG. 5 is a scanning electron microscope (SEM) image of the surface of the dried product prepared in Example 1.
FIG. 6 is a SEM image of the surface of the dried product prepared in Comparative Example 1.
FIG. 7 is a SEM image of the surface of the dried product prepared in Comparative Example 2.
FIG. 8 is a SEM image of the surface of the dried product prepared in Comparative Example 3.
FIG. 9 is a SEM image of the surface of a lithium nickel-based composite oxide prepared in Comparative Example 4.
FIG. 10 is a scanning electron microscopy with energy dispersive X-ray spectroscopy (SEM-EDS) image of aluminium in a cross-section of the dried product prepared in Example 1.
FIG. 11 is a SEM-EDS image of aluminium in a cross-section of the dried product prepared in Comparative Example 1.

### DETAILED DESCRIPTION

The subject matter of the present invention will be described more fully hereinafter with reference to the accompanying drawings, in which embodiments of the present disclosure are shown. As those skilled in the art would realize, the described embodiments may be modified in one or more suitable different ways, all without departing from the scope of the present disclosure. The drawings and description are to be regarded as illustrative in nature and not restrictive. Like reference numerals designate like elements throughout the attached drawings and the written description, and duplicative descriptions thereof may not be provided in the specification.

The terminology used herein is used to describe one or more embodiments of the present disclosure only and is not intended to limit the scope of the present disclosure.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the singular forms "a," "an," and "the" are intended to include the plural forms as well, unless the context clearly indicates otherwise.

The singular expression includes the plural expression unless the context clearly dictates otherwise.

As used herein, the term "and/or" or "or" includes any and all combinations of one or more of the associated listed items. For example, "or" is not to be construed as an exclusive meaning, for example, "A or B" is construed to include A, B, A+B, and/or the like.

Throughout the present disclosure, the expressions, such as "at least one of," "one of," and "selected from," if (e.g., when) preceding a list of elements, modify the entire list of elements and do not modify the individual elements of the list. For example, "at least one of a, b, or c," "at least one selected from among a, b, and c," "at least one selected from among a to c," and/or the like indicates only a, only b, only c, both (e.g., simultaneously) a and b, both (e.g., simultaneously) a and c, both (e.g., simultaneously) b and c, all of a, b, and c, or variations thereof.

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to as being within an acceptable range of deviation for the particular value as determined by one of ordinary skill in the art, considering the measurement in question and the error associated with measurement of the particular quantity (e.g., the limitations of the measurement system). For example, "about" may refer to as being within one or more standard deviations or within ±30%, ±20%, ±10%, or ±5% of the stated value. Also, it should be understood that, even if (e.g., when) the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein. Accordingly, Applicant reserves the right to amend the disclosure, including the claims, to expressly recite any sub-range subsumed within the ranges expressly recited herein.

As used herein, "combination thereof" refers to a mixture, a laminate, a composite, a copolymer, an alloy, a blend, a reaction product, and/or the like of the constituents.

Herein, it should be understood that the terms, such as "has," "includes," "having," or "including," are intended to designate the presence of an embodied feature, number, step (e.g., act or task), element, or a (e.g., any suitable) combination thereof, but it does not preclude the possibility of the presence or addition of one or more other features, numbers, steps (e.g., acts or tasks), elements, or a (e.g., any suitable) combination thereof. For example, it should be understood that the term "comprise(s)/comprising," "include(s)/including," or "have/has/having" specifies the presence of stated features, integers, steps (e.g., acts or tasks), operations, elements, and/or components, but do not preclude the presence or addition of one or more other features, integers, steps (e.g., acts or tasks), operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps (e.g., acts or tasks), operations, elements, and/or components, without or essentially without the presence of other features, integers, steps (e.g., acts or tasks), operations, elements, components, and/or groups thereof.

In the drawings, the thickness of layers, films, panels, regions, and/or the like. may be exaggerated for clarity.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

The term "layer" herein includes not only a shape formed on the whole surface if (e.g., when) viewed from a plan view, but also a shape formed on a partial surface.

The average particle diameter may be measured by any suitable method that is generally available to or generally used by those skilled in the art, for example, by a particle size analyzer and/or by a transmission electron microscope (TEM) image and/or a scanning electron microscope (SEM) image. In one or more embodiments, it may be feasible to obtain an average particle diameter value by measuring using a dynamic light scattering (DLS) method, performing data analysis, counting the number of particles for each particle size range, and calculating from this data. Unless otherwise defined, the average particle diameter (D₅₀) may refer to the diameter of particles having a cumulative volume of 50 volume% in the particle size distribution. As used herein, if (e.g., when) a definition is not otherwise provided, the average particle diameter (D₅₀) refers to a diameter of particles having a cumulative volume of 50 volume% in the particle size distribution that is obtained by measuring the size (e.g., diameter or major axis length) of about 20 particles at random in a scanning electron microscope image. In one or more embodiments, dynamic light scattering (DLS) may be used, where particle counts within size ranges are analyzed to calculate the average particle diameter (D₅₀). Also, a laser scattering method may be employed, in which a target particle is dispersed in a solvent, introduced into a laser scattering particle measurement device (e.g., MT3000 from Microtrac, Inc.), irradiated with ultrasonic waves at 28 kHz and 60 W, and subsequently analyzed to determine the D₅₀ value based on a 50% cumulative particle size distribution. Also, in the present disclosure, if (e.g., when) particles are substantially cylindrical or spherical, "diameter" refers to the average diameter of such particles. If (e.g., when) the particles are non-cylindrical or irregular in shape, "diameter" refers to the average major axis length of the particles.

Herein, "metal" is interpreted as a concept including ordinary metals, transition metals, and metalloids (semi-metals).

### Method of Preparing Positive Electrode Active Material

In one or more embodiments, a method for preparing a positive electrode active material includes: (i) preparing core particles including a lithium nickel-based composite oxide; (ii) adding the core particles to an aqueous (e.g., water-soluble) solvent and mixing them (e.g., the core particles and the aqueous solvent) to prepare a first mixed solution, and adjusting pH of the first mixed solution to a range between about 5.5 and about 7.5 ; (iii) adding an aluminium raw material to the first mixed solution and mixing them (e.g., the aluminium raw material and the first mixed solution) to prepare a second mixed solution; and (iv) removing an aqueous (e.g., water-soluble) solvent from the second mixed solution to prepare a dried product.

It is recognized that if (e.g., when) providing a coating of aluminium to strengthen particle surfaces of a positive electrode active material, it is not easy to actually achieve a uniform (e.g., substantially uniform) coating of aluminium on the surfaces of the particle in the form of a shell because aluminium has a strong tendency to diffuse into the interior of the particles. Therefore, in one or more embodiments of the invention, conditions are described under which aluminium may be uniformly (e.g., substantially uniformly) coated on the particle surfaces without increasing resistance (e.g., electrical resistance). A rechargeable lithium battery utilizing a positive electrode active material prepared according to the aforementioned method for preparing a positive electrode active material according to one or more embodiments may have improved or enhanced initial charge/discharge capacity and initial charge/discharge efficiency under high-voltage conditions while at the same time (e.g., concurrently) improving or enhancing high-temperature cycle-life characteristics, and also improving or enhancing high-temperature storage characteristics.

The dried product is a positive electrode active material in which aluminium is coated on the surfaces of the core particles. The method for preparing the positive electrode active material may optionally further include a step of heat-treating the dried product after step (e.g., act or task) (iv).

In a method for preparing a positive electrode active material according to one or more embodiments, the preparing of the core particles including a lithium nickel-based composite oxide may include mixing a nickel-based composite hydroxide and a lithium raw material and performing a first heat treatment. The nickel-based composite hydroxide may be a precursor of core particles and may be in a form of secondary particles in which a plurality of primary particles are agglomerated. The nickel-based composite hydroxide may be prepared by a co-precipitation method that is generally available.

In the nickel-based composite hydroxide, a nickel content (e.g., amount) based on 100 mol% of a total metal (e.g., based on a total of 100 mol% of metal) may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. If (e.g., when) the nickel content (e.g., amount) satisfies the foregoing range, high capacity (e.g., high initial charge/discharge capacity) may be achieved and structural stability may be improved or enhanced.

In the nickel-based composite hydroxide, a cobalt content (e.g., amount) based on 100 mol% of a total metal (e.g., based on a total of 100 mol% of metal) may be less than or equal to about 8 mol%, for example, in a range of about 0.1 mol% to about 8 mol%, about 1 mol% to about 8 mol%, about 3 mol% to about 8 mol%, about 3 mol% to about 6 mol%, or about 6 mol% to about 8 mol%. If (e.g., when) the cobalt content (e.g., amount) satisfies the foregoing range, structural stability of the positive electrode active material may be improved or enhanced while implementing high capacity (e.g., high initial charge/discharge capacity).

The nickel-based composite hydroxide may be represented, for example, by Chemical Formula 1:

**Chemical Formula 1** Niₓ₁M1y₁M2_{z1}(OH)₂

In Chemical Formula 1, 0.8 ≤ x1 ≤ 1, 0 ≤ y1 ≤ 0.2, 0 ≤ z1 ≤ 0.2, 0.9 ≤ x1 +y1 +z1 ≤ 1.1, M1 and M2 may each independently be one or more elements selected from among aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), yttrium (Y), vanadium (V), tungsten (W), zinc (Zn), and zirconium (Zr), and M1 and M2 may be different from each other.

In Chemical Formula 1, 0.9≤x1<1, 0<y1 ≤0.1, and 0≤z1≤0.1.

The nickel-based composite hydroxide may be in the form of particles, and an average particle diameter (D₅₀) of the particles may be in a range of about 10 µm to about 25 µm, for example, about 11 µm to about 20 µm or about 12 µm to about 18 µm.

The nickel-based composite hydroxide and the lithium raw material may be mixed in a molar ratio ranging from about 1:0.9 to about 1:1.8, for example, in a molar ratio ranging from about 1:0.9 to about 1:1.5 or about 1:1 to about 1:1.2. The first heat treatment may be performed in an oxygen atmosphere and may be performed at a temperature range of, for example, about 750 °C to about 950 °C, about 780 °C to about 900 °C, or about 810 °C to about 890 °C, and may be performed for about 2 hours to about 20 hours or about 4 hours to about 12 hours.

The lithium nickel-based composite oxide may be obtained through the first heat treatment. In the obtained lithium nickel-based composite oxide, a nickel content (e.g., amount) based on 100 mol% of a total metal excluding lithium (e.g., based on a total of 100 mol% of metal excluding lithium) may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. If (e.g., when) the nickel content (e.g., amount) satisfies the foregoing range, high capacity (e.g., high initial charge/discharge capacity) may be achieved and structural stability may be improved or enhanced.

In the obtained lithium nickel-based composite oxide, a cobalt content (e.g., amount) based on 100 mol% of a total metal excluding lithium (e.g., based on a total of 100 mol% of metal excluding lithium) may be less than or equal to about 8 mol%, for example, in a range of about 0.1 mol% to about 8 mol%, about 1 mol% to about 8 mol%, about 3 mol% to about 8 mol%, about 3 mol% to about 6 mol%, or about 6 mol% to about 8 mol%. If (e.g., when) the cobalt content (e.g., amount) satisfies the foregoing range, structural stability of the positive electrode active material may be improved or enhanced while implementing high capacity (e.g., high initial charge/discharge capacity).

The lithium nickel-based composite oxide may be represented by Chemical Formula 2:

**Chemical Formula 2** Liₐ₂Niₓ₂M3_{y2}M4_{z2}O_{2-b2}X_{b2}

In Chemical Formula 2, 0.9≤a2≤1.8, 0.8≤x2≤1, 0≤y2≤0.2, 0≤z2≤0.2, 0.9 ≤ x2+y2+z2 ≤ 1.1, 0 ≤ b2 ≤ 0.1, M3 and M4 may each independently be one or more elements selected from among Al, B, Ba, Ca, Ce, Co, Cr, Cu, Fe, Mg, Mn, Mo, Nb, Si, Sn, Sr, Ti, Y, V, W, Zn, and Zr, M3 and M4 may be different elements from each other, and X may be one or more elements selected from among fluorine (F), phosphorus (P), and sulfur (S).

In Chemical Formula 2, 0.9 ≤ x2<1, 0<y2 ≤ 0.1, and 0 ≤ z2 ≤ 0.1.

According to one or more embodiments, based on a total of 100 wt% of the core particles, the residual lithium content (e.g., amount) on the surfaces of the core particles may be greater than or equal to about 0.4 wt%, for example, in a range of about 0.4 wt% to about 0.8 wt%. For example, based on a total of 100 wt% of the core particles, an amount of LiOH on the surface of the core particles may be greater than or equal to about 1.0 wt%, for example, in a range of about 1.0 wt% to about 2.0 wt%, and based on a total of 100 wt% of the core particles, an amount of Li₂CO₃ on the surface of the core particles may be greater than or equal to about 0.6 wt%, for example, in a range of about 0.6 wt% to about 1.0 wt%. The amount of the residual lithium, the amount of LiOH, and the amount of Li₂CO₃ may be measured through a hydrochloric acid (HCl) titration method.

The lithium nickel-based composite oxide may have a significantly or substantially different content (e.g., amount) of residual lithium on the particle surfaces and one or more suitable surface characteristics as compared to oxides of other compositions, such as a lithium nickel-cobalt-manganese-based composite oxide, a lithium nickel-cobalt-aluminium-based composite oxide, a lithium cobalt-based composite oxide, and/or the like, making it impossible to form a good or suitable coating layer in the form of a substantially uniform film using coating methods that are generally available. In one or more embodiments, a method is proposed whereby the particle surface of a lithium nickel-based composite oxide having the residual lithium content (e.g., amount) as described in one or more embodiments may be, or is, very uniformly (e.g., substantially uniformly) coated with aluminium.

In one or more embodiments, the core particles are first introduced into an aqueous (e.g., water-soluble) solvent and mixed to prepare a first mixed solution, and the pH of the first mixed solution is adjusted to a range between about 5.5 and about 7.5 to appropriately or suitably control the residual lithium content (e.g., amount) on the surface of the core particles. For example, in the step (e.g., act or task) (ii), the adjusting of the pH of the first mixed solution may be performed by utilizing an acidic aqueous (e.g., water-soluble) solution. Then, an aluminium raw material is added to the first mixed solution and mixed to prepare a second mixed solution. Thereafter, the aqueous solvent is removed from the second mixed solution to produce a dried product to form a coating layer on the surface of the core particles. A method for preparing a positive electrode active material according to one or more embodiments may further a step of heat-treating the dried product. Unlike a known pre-addition method in which an aluminium salt, which is a coating raw material, is first completely (e.g., substantially completely) dissolved and then the positive electrode active material particles are added, the method according to the present invention reduces the residual lithium content (e.g., amount) on the surface by washing the positive electrode active material (e.g., a high-nickel positive electrode active material) using an aqueous (e.g., water-soluble) solvent with a pH adjusted to a range between 5.5 and 7.5 (e.g., neutral), and then proceeding with aluminium coating, thereby applying optimal or suitable conditions to form a substantially uniform aluminium coating layer on the lithium nickel-based composite oxide.

The aqueous solvent may be distilled water.. The aluminium raw material may be aluminium sulfate, aluminium nitrate, or a (e.g., any suitable) combination thereof, and may be, for example, aluminium sulfate. The aluminium sulfate may be the optimal or suitable raw material to form a substantially uniform aluminium coating layer on lithium nickel-based composite oxide.

Based on total 100 mol% of a total metal excluding lithium (e.g., based on a total of 100 mol% of metal excluding lithium) in the lithium nickel-based composite oxide and aluminium of the aluminium raw material, the aluminium content (e.g., amount) in the aluminium raw material may be designed to be in a range of about 0.1 mol% to about 2.0 mol%, for example, about 0.5 mol% to about 2.0 mol%, about 0.5 mol% to about 1.5 mol%, or about 1.0 mol% to about 1.5 mol%. By designing the aluminium content (e.g., amount) within the foregoing range, the coating layer may be formed to have a thin and substantially uniform thickness of tens to hundreds of nanometers, which may reduce an amount of gas generated of a rechargeable lithium battery under high-voltage or high-temperature operating conditions and improve or enhance high capacity (e.g., high initial charge/discharge capacity) and long cycle-life characteristics.

The time desired or required to introduce the core particles into the aqueous solvent may be in a range of about 1 seconds/500 g to about 2 minutes/500 g, for example, about 1 seconds/500 g to about 1.5 minutes/500 g. By appropriately or suitably controlling a speed at which core particles are injected, the pH of the supernatant after coating is appropriately or suitably controlled or selected, thereby effectively or suitably inducing the formation of an aluminium coating layer according to one or more embodiments. If (e.g., when) the injection speed of the core particles is too fast (e.g., substantially fast), after completing the coating, the pH of the supernatant may increase and become basic, failing in forming a substantially uniform coating layer. In one or more embodiments, if (e.g., when) the injection speed of the core particles is too slow (e.g., substantially slow), the pH of the supernatant may decrease and become strongly or substantially acidic, also failing in forming a substantially uniform coating layer. After adding all the core particles to the aqueous solvent, the mixture may be stirred for about 15 minutes to about 60 minutes, for example, about 20 minutes to about 50 minutes or about 30 minutes to about 45 minutes. The total time from injection of the core particles to the aqueous solvent to the completion of stirring may be appropriately or suitably adjusted within about 1 hour.

The pH adjustment in step (e.g., act or task) (ii) of the first mixed solution of the core particles and the aqueous solvent in a range of about 5.5 to about 7.5 may be performed by adding an acidic aqueous (e.g., water-soluble) solution thereto, for example, the acidic aqueous solution may be added thereto and then, mixed, after adding the core particles to the aqueous solvent and then, mixing them (e.g., the core particles and the aqueous solvent). The acidic aqueous solution may be, for example, a hydrochloric acidic aqueous (e.g., water-soluble) solution (e.g., hydrochloric acid (HCl)), a sulfuric acidic aqueous (e.g., water-soluble) solution (e.g., sulfuric acid (H₂SO₄)), a nitric acidic aqueous (e.g., water-soluble) solution (e.g., nitric acid (HNO₃)), and/or the like, and, for example, the hydrochloric acidic aqueous solution (e.g., hydrochloric acid (HCl)). The acidic aqueous solution may be used to adjust the pH of the first mixed solution to a range between about 5.5 and about 7.5, for example, to a range between about 6.0 and about 7.5 or between about 6.5 and about 7.5, and if (e.g., when) the pH of the first mixed solution is adjusted within the foregoing ranges, because aluminium coating proceeds after reducing a residual lithium content (e.g., amount) on the surface, it may be easy to form a substantially uniform aluminium coating layer on the lithium nickel-based composite oxide.

The mixing (e.g., stirring) after adding the aluminium raw material to the first mixed solution with the adjusted pH may proceed for about 1 minute to about 60 minutes, for example, about 3 minutes to about 30 minutes or about 5 minutes to about 10 minutes. In one or more embodiments, the mixing (e.g., stirring) may be performed at a speed of about 100 rpm to about 800 rpm, for example, about 200 rpm to about 600 rpm or about 250 rpm to about 500 rpm. Through these conditions, the aluminium raw material may be completely (e.g., substantially completely) dissolved in the aqueous solvent, effectively or suitably forming a substantially uniform aluminium coating layer according to one or more embodiments.

In one or more embodiments, if (e.g., when) the mixing is stopped after adding the aluminium raw material to the first mixed solution, for example, if (e.g., when) the second mixed solution is prepared, the pH of the supernatant of the second mixed solution may be within a range of about 5.5 to about 7.5, for example, about 6.0 to about 7.5 or about 6.5 to about 7.5. If (e.g., when) the supernatant has pH of less than about 5.5, the acidity may become strong, failing in forming a substantially uniform coating layer, but if (e.g., when) the pH is greater than about 7.5, because basicity becomes strong, it may also become difficult to form a substantially uniform aluminium coating layer.

After removing the aqueous solvent from the second mixed solution, a dried product is prepared therefrom, for example, at about 40 °C to about 240 °C, about 100 °C to about 220 °C, or about 150 °C to about 200 °C, for example, under vacuum conditions, and under these conditions, a good or suitable dried product may be obtained.

The dried product includes the core particles and the coating layer, which is arranged on the surfaces of the core particles and includes aluminium. For example, the coating layer may include a fiber shape (e.g., in a form of fibers), for example, a spider web shape or a mesh shape. Such a mesh may be formed continuously (e.g., substantially continuously) across the entire (e.g., substantially entire) surface of the core particles. The mesh-like coating layer, which may have a very thin and substantially uniform thickness, may wrap the core particles very thinly (e.g., substantially thinly) and uniformly (e.g., substantially uniformly), thereby reinforcing the surfaces of the particles of positive electrode active material and improving or enhancing structural stability, high-temperature, and high-voltage characteristics.

According to one or more embodiments, the aluminium content (e.g., amount) based on a total of 100 atomic percent (at%) of a total metal excluding lithium measured by energy profiling energy dispersive spectroscopy (EP-EDS) on the surface of a dried product may be in a range of about 35 at% to about 45 at%.

A method for preparing a positive electrode active material according to one or more embodiments may further a step of heat-treating the dried product. If (e.g., when) the heat treatment of the nickel-based composite hydroxide and the lithium raw material is expressed as the first heat treatment, the heat treatment of the dried product may be referred to the second heat treatment. The second heat treatment may be performed, for example, in an oxygen atmosphere at a temperature range of about 700 °C to about 850 °C, about 750 °C to about 840 °C, or about 800 °C to about 830 °C for about 2 hours to about 20 hours or about 3 to about 10 hours. If (e.g., when) the second heat treatment temperature is set within the foregoing range, the tendency of aluminium to diffuse into the interior of the core particles (e.g. ,secondary particles) may be reduced, so that (e.g., such that) it remains mainly or predominantly on the surfaces of the core particles (e.g. secondary particles), and at the same time (e.g., concurrently), the surfaces of the core particles (e.g. secondary particles) are coated, where the coating may be in the form of a shell having a very thin and substantially uniform thickness.

The coating layer according to one or more embodiments may be in the form of a film that is provided continuously (e.g., substantially continuously) around (e.g., surrounds) the surfaces of the core particle and may be, for example, in the form of a shell that is around (e.g., surrounds) the entire (e.g., substantially entire) surfaces of the core particles. This may be distinct from a structure in which only portion of the surfaces of the core particles is coated, i.e. only partially coated. According to one or more embodiments, the coating layer may be formed to entirely (e.g., substantially entirely) cover the surfaces of the core particles and may be formed to be very thin (e.g., substantially thin) and uniform (e.g., substantially uniform) in thickness, and therefore, the positive electrode active material may not increase resistance (e.g., electrical resistance) or decrease capacity (e.g., initial charge/discharge capacity) and may improve or enhance structural stability, effectively or suitably suppress side reactions with electrolytes (or reduce a degree or occurrence of side reactions with electrolytes), reduce the amount of gas generated under high-voltage and high-temperature conditions, and achieve long cycle-life characteristics.

A thickness of the coating layer according to one or more embodiments may be in a range of about 5 nm to about 200 nm, for example, about 5 nm to about 150 nm, about 5 nm to about 100 nm, about 5 nm to about 80 nm, about 5 nm to about 50 nm, or about 10 nm to about 50 nm. If (e.g., when) the coating layer satisfies the foregoing thickness range, structural stability of the positive electrode active material may be improved or enhanced and side reactions with the electrolyte may be effectively or suitably suppressed (or a degree or occurrence of side reactions with the electrolyte may be effectively or suitably reduced) without increasing resistance (e.g., electrical resistance) or decreasing capacity (e.g., initial charge/discharge capacity) due to the coating. The thickness of the coating layer may be measured, for example, by SEM, transmission electron microscopy (TEM), time-of-flight secondary ion mass spectrometry (TOF-SIMS), X-ray photoelectron spectroscopy (XPS), and/or energy dispersive X-ray spectroscopy (EDS) analyses, and, for example, by EDS line profile analysis of a cross-section of the positive electrode active material.

The coating layer according to one or more embodiments may be substantially thin and substantially uniform in thickness, at the level of tens to hundreds of nanometers. For example, a deviation in coating layer thickness within one positive electrode active material particle may be less than or equal to about 20%, less than or equal to about 18%, or less than or equal to about 15%. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the foregoing range indicates that a coating layer of substantially uniform thickness may be formed in a good or suitable shape on the surface of the positive electrode active material particle. Accordingly, structural stability of the positive electrode active material may be improved or enhanced, side reactions with the electrolyte may be effectively or suitably suppressed (or a degree or occurrence of side reactions with the electrolyte may be effectively or suitably reduced), and the increase in resistance (e.g., electrical resistance) or decrease in capacity (e.g., initial charge/discharge capacity) due to coating may be minimized or reduced.

In one or more embodiments, the coating layer may further contain nickel, cobalt, or a (e.g., any suitable) combination thereof in addition to aluminium. Nickel is included in the core particles and may be further introduced during the coating layer formation process, whilst cobalt may also be included in the core particles and may be introduced during the coating layer formation process; either way, their contents (e.g., amounts) are not particularly limited. A coating layer according to one or more embodiments essentially includes aluminium and optionally may include nickel and cobalt and may be formed to have a substantially thin and substantially uniform thickness, thereby improving or enhancing the high-voltage characteristics of the positive electrode active material and enhancing the cycle-life characteristics.

In one or more embodiments, the coating layer may further contain chlorine in addition to the aluminium. The chlorine may inflow during the process of adding the hydrochloric acidic aqueous solution (e.g., hydrochloric acid (HCl)) to the acidic aqueous solution to form the coating layer, wherein a content (e.g., amount) of the chlorine may be greater than or equal to about 0.1 wt%, for example, in a range of about 0.1 wt% to about 0.3 wt% based on a total of 100 wt% of the positive electrode active material. For example, based on a total weight of the positive electrode active material, the chlorine content (e.g., amount) may be greater than or equal to about 1000 ppm, for example, in a range of about 1000 ppm to about 3000 ppm. The coating layer according to one or more embodiments essentially includes aluminium and optionally may include chlorine, thereby improving or enhancing high-voltage characteristics of the positive electrode active material and enhancing cycle-life characteristics. The chlorine content (e.g., amount) may be measured through inductively coupled plasma (ICP) spectroscopy of the positive electrode active material.

The obtained positive electrode active material includes the core particles comprising lithium nickel-based composite oxide, and a coating layer positioned on the surface of the core particles. The coating layer may contain aluminium oxide, lithium-aluminium oxide, or a (e.g., any suitable) combination thereof.

### Positive Electrode Active Material

One or more embodiments of the present invention provide a positive electrode active material prepared according to the method for preparing the positive electrode active material. By introducing a coating layer including a specific (e.g., set or predetermined) content (e.g., amount) of aluminium onto the surfaces of core particles including a lithium nickel-based composite oxide, a method as described herein may maintain a stable structure even at high voltage, implement high-capacity (e.g., high initial charge/discharge capacity) and long cycle-life characteristics, and improve or enhance high-temperature storage characteristics.

### Core Particles

The core particles include a lithium nickel-based composite oxide, and the lithium nickel-based composite oxide may be represented by Chemical Formula 2 (described earlier in this specification).

In the lithium nickel-based composite oxide, the nickel content (e.g., amount) based on 100 mol% of a total metal excluding lithium (e.g., based on a total of 100 mol% of metal excluding lithium) may be greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. If (e.g., when) the nickel content (e.g., amount) satisfies the foregoing range, high capacity (e.g., high initial charge/discharge capacity) may be achieved and structural stability may be improved or enhanced.

In the lithium nickel-based composite oxide, a cobalt content (e.g., amount) based on 100 mol% of a total metal excluding lithium (e.g., based on a total of 100 mol% of metal excluding lithium) may be less than or equal to about 8 mol%, for example, in a range of about 0.1 mol% to about 8 mol%, about 1 mol% to about 8 mol%, about 3 mol% to about 8 mol%, about 3 mol% to about 6 mol%, or about 6 mol% to about 8 mol%. If (e.g., when) the cobalt content (e.g., amount) satisfies the foregoing range, structural stability of the positive electrode active material may be improved or enhanced while implementing high capacity (e.g., high initial charge/discharge capacity).

The core particles may be in a form of secondary particles in which a plurality of primary particles are agglomerated. Herein, the secondary particles may be spherical (e.g., substantially spherical), ellipsoidal (e.g., substantially ellipsoidal), polyhedral (e.g., substantially polyhedral), or irregularly shaped, and the primary particles may be spherical (e.g., substantially spherical), ellipsoidal (e.g., substantially ellipsoidal), plate-shaped (e.g., substantially plate-shaped), or a (e.g., any suitable) combination thereof.

An average particle diameter (D₅₀) of the core particles may be in a range of about 10 µm to about 25 µm, for example, about 11 µm to about 20 µm or about 12 µm to about 18 µm. The average particle diameter (D₅₀) refers to a diameter of particles having a cumulative volume of 50 volume% in the particle size distribution that is obtained by measuring the size (e.g., diameter or major axis length) of about 20 particles at random in a scanning electron microscope image for positive electrode active materials. If (e.g., when) the average particle diameter of the core particles satisfies the foregoing range, high capacity (e.g., high initial charge/discharge capacity) and long cycle-life may be achieved and it may be advantageous or beneficial to form a coating layer according to one or more embodiments.

The core particles may be easily chemically attacked by components in the electrolyte if (e.g., when) the rechargeable lithium battery is operated under high-voltage or high-temperature conditions, so that (e.g., such that) side reactions with the electrolyte may occur frequently, and as a result, a large amount of gas is generated, which reduces the rechargeable lithium battery cycle-life and safety. However, these problems may be solved by introducing a coating layer according to one or more embodiments to be described herein in more detail.

### Coating Layer

According to one or more embodiments, a positive electrode active material includes a coating layer arranged on the surfaces of the core particles which includes aluminium, wherein an aluminium content (e.g., amount) may be in a range of about 35 at% to about 45 at% based on a total of 100 at% of a total metal excluding lithium as measured by energy profiling energy dispersive spectroscopy (EP-EDS) on the surface of the positive electrode active material. In one or more embodiments, a chlorine content (e.g., amount) may be greater than or equal to about 0.1 wt% based on a total of 100 wt% of the positive electrode active material.

### Positive Electrode

In one or more embodiments, a positive electrode includes a positive electrode current collector and a positive electrode active material layer on the positive electrode current collector, wherein the positive electrode active material layer includes the positive electrode active material as described in one or more embodiments. The positive electrode active material layer may further include other types (kinds) of positive electrode active materials in addition to the positive electrode active material as described in one or more embodiments. In one or more embodiments, the positive electrode active material layer may optionally further include a binder, a conductive (e.g., electrically conductive) material (e.g., an electron conductor), or a (e.g., any suitable) combination thereof.

### Binder

The binder may improve or enhance binding properties of positive electrode active material particles with one another and with a current collector. Examples of the binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but embodiments of the present disclosure are not limited thereto.

### Conductive Material

The conductive material may be included to provide electrode conductivity (e.g., electrical conductivity) and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a (e.g., any suitable) mixture thereof.

Each amount of the binder and the conductive material may be in a range of about 0.5 wt% to about 5 wt%, based on 100 wt% of the positive electrode active material layer.

The positive electrode current collector may include Al, but embodiments of the present disclosure are not limited thereto.

### Rechargeable Lithium Battery

One or more embodiments of the present invention provide a rechargeable lithium battery including the positive electrode as described in one or more embodiments, a negative electrode, and an electrolyte. As an example, the rechargeable lithium battery may include a positive electrode, a negative electrode, a separator arranged between the positive electrode and the negative electrode, and an electrolyte solution.

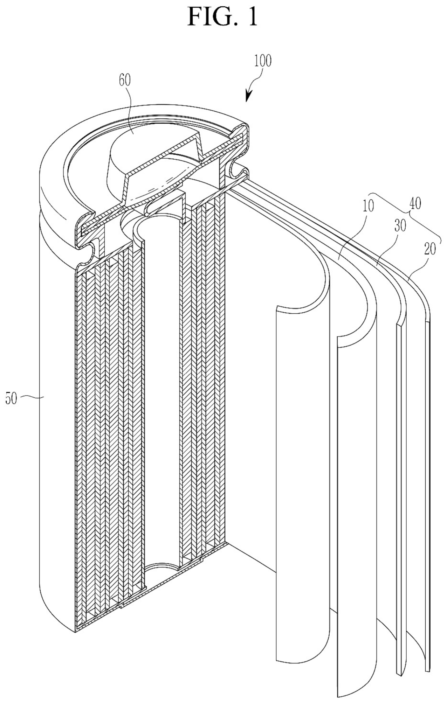

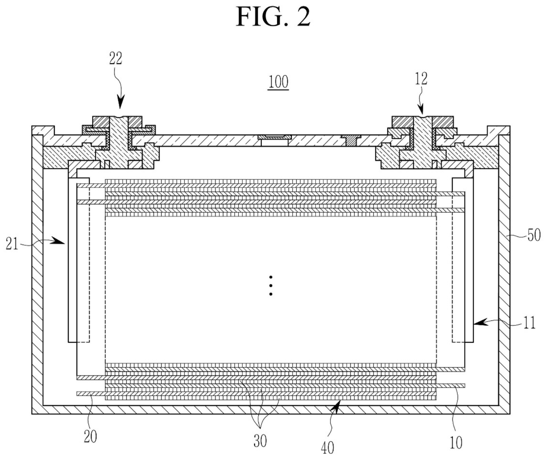

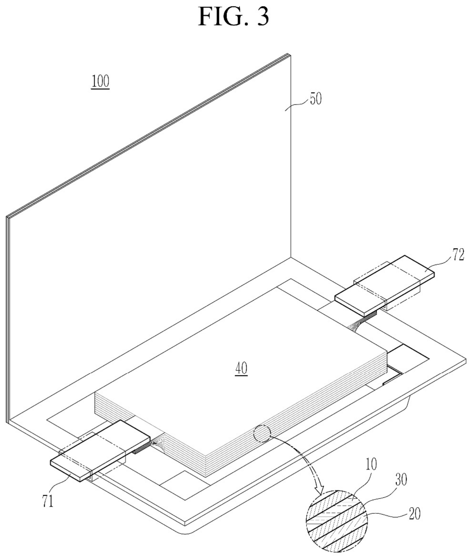

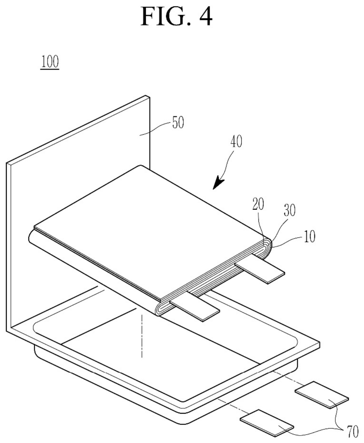

The rechargeable lithium battery may be classified into cylindrical, prismatic, pouch, coin, and/or the like depending on the shape. FIGS. 1 to 4 each is a schematic view illustrating the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, a rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as illustrated in FIG. 1. In FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 serving as an electrical path to induce the current formed in the electrode assembly 40 to the outside.

### Negative Electrode

The negative electrode may include a current collector and a negative electrode active material layer on the current collector and may further include a negative electrode active material, a binder, a conductive (e.g., electrically conductive) material (e.g., an electron conductor), or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous (e.g., non-crystalline) carbon, or a (e.g., any suitable) combination thereof as a carbon-based negative electrode active material. The crystalline carbon may be irregular, or sheet (e.g., substantially sheet), flake (e.g., substantially flake), spherical (e.g., substantially spherical), or fiber shaped (e.g., in a form of fibers) natural graphite and/or artificial graphite. The amorphous carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOₓ (wherein 0 < x ≤ 2; e.g., SiO₂), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a (e.g., any suitable) combination thereof, for example, Mg, Ca, Sr, Ba, Ra, scandium (Sc), yttrium (Y), Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, thallium (TI), Ge, P, arsenic (As), Sb, bismuth (Bi), S, selenium (Se), tellurium (Te), polonium (Po), and a (e.g., any suitable) combination thereof), or a (e.g., any suitable) combination thereof. The Sn-based negative electrode active material may be Sn, SnOₖ (wherein 0 < k ≤ 2; e.g., SnO₂), a Sn alloy, or a (e.g., any suitable) combination thereof.

The silicon-carbon composite may be a composite of silicon and amorphous (e.g., non-crystalline) carbon. An average particle diameter (D₅₀) of the silicon-carbon composite particles may be, for example, in a range of about 0.5 µm to about 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous carbon may also be present between the silicon primary particles, and, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, or a (e.g., any suitable) combination thereof. The amorphous carbon may include soft carbon, hard carbon, a mesophase pitch carbonized product, and/or calcined coke.

If (e.g., when) the silicon-carbon composite includes silicon and amorphous (e.g., non-crystalline) carbon, an amount of silicon may be in a range of about 10 wt% to about 50 wt% and an amount of amorphous (e.g., non-crystalline) carbon may be in a range of about 50 wt% to about 90 wt% based on 100 wt% of the silicon-carbon composite. In one or more embodiments, if (e.g., when) the composite includes silicon, amorphous (e.g., non-crystalline) carbon, and crystalline carbon, an amount of silicon may be in a range of about 10 wt% to about 50 wt%, an amount of crystalline carbon may be in a range of about 10 wt% to about 70 wt%, and an amount of amorphous (e.g., non-crystalline) carbon may be in a range of about 20 wt% to about 40 wt% based on 100 wt% of the silicon-carbon composite.

In one or more embodiments, a thickness of the amorphous carbon coating layer may be in a range of about 5 nm to about 100 nm. An average particle diameter (D₅₀) of the silicon particles (primary particles) may be in a range of about 10 nm to about 1 µm or about 10 nm to about 200 nm. The silicon particles may exist as silicon alone, in the form of a silicon alloy, or in an oxidized form. The oxidized form of silicon may be represented by SiOₓ (wherein 0 < x ≤ 2; e.g., SiO₂). At this time, the atomic content (e.g., amount) ratio of Si:O, which indicates a degree of oxidation, may be in a range of about 99:1 to about 33:67. As used herein, if (e.g., when) a definition is not otherwise provided, an average particle diameter (D₅₀) indicates a particle where a cumulative volume is about 50 volume% in a particle size distribution.

The Si-based negative electrode active material or the Sn-based negative electrode active material may be mixed with the carbon-based negative electrode active material. If (e.g., when) the Si-based negative electrode active material or the Sn-based negative electrode active material and the carbon-based negative electrode active material are mixed and used, the mixing ratio may be a weight ratio ranging from about 1:99 to about 90:10.

### Binder

The binder may serve to well or suitably adhere the negative electrode active material particles to each other and also to adhere the negative electrode active material to the current collector. The binder may be a non-aqueous (e.g., water-insoluble) binder, an aqueous (e.g., water-soluble) binder, a dry binder, or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, or a (e.g., any suitable) combination thereof.

If (e.g., when) an aqueous (e.g., water-soluble) binder is used as the negative electrode binder, a cellulose-based compound capable of imparting or increasing viscosity may further be included. As the cellulose-based compound, one or more of carboxymethyl cellulose, hydroxypropyl methylcellulose, methyl cellulose, or alkali metal salts thereof may be mixed and used. The alkali metal may be Na, K, or lithium (Li).

The dry binder may be a polymer material capable of becoming a fiber and may be, for example, polytetrafluoroethylene, polyvinylidene fluoride, a polyvinylidene fluoride-hexafluoropropylene copolymer, polyethylene oxide, or a (e.g., any suitable) combination thereof.

### Conductive Material

The conductive material may be included to provide electrode conductivity (e.g., electrical conductivity), and any suitable electrically conductive material may be utilized as a conductive (e.g., electrically conductive) material unless it causes a chemical change (e.g., an undesirable chemical change). Examples of the conductive material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a polyphenylene derivative; or a (e.g., any suitable) mixture thereof.

An amount of the negative electrode active material may be in a range of about 95 wt% to about 99.5 wt% based on 100 wt% of the negative electrode active material layer, and an amount of the binder may be in a range of about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, a sheet, or a foam. A thickness of the negative electrode current collector may be, for example, in a range of about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous (e.g., water-insoluble) organic solvent and a lithium salt.

The non-aqueous organic solvent may serve as a medium to transmit ions taking part in the electrochemical reaction of a rechargeable lithium battery. The non-aqueous organic solvent may be a carbonate-based solvent, an ester-based solvent, an ether-based solvent, a ketone-based solvent, an alcohol-based solvent, an aprotic solvent, or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, a double bond, an aromatic ring, an ether bond), and/or the like; amides, such as dimethylformamide and/or the like; dioxolanes, such as 1,3-dioxolane, 1,4-dioxolane, and/or the like; sulfolanes, and/or the like.

The non-aqueous organic solvent may be used alone or in a mixture of two or more types (kinds), and if (e.g., when) two or more types (kinds) are used in a mixture, a mixing ratio may be appropriately or suitably adjusted according to the desired or suitable battery performance, which is generally available to those working in the field.

If (e.g., when) using a carbonate-based solvent, a cyclic carbonate and a chain carbonate may be mixed and used, and the cyclic carbonate and the chain carbonate may be mixed in a volume ratio ranging from about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio ranging from about 1:1 to about 30:1.

The electrolyte solution may further include vinyl ethylene carbonate, vinylene carbonate, and/or an ethylene carbonate-based compound to improve or enhance battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and/or the like.

The lithium salt dissolved in the organic solvent may be to supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If (e.g., when) the concentration of lithium salt is within the foregoing range, the electrolyte solution may have appropriate or suitable ionic conductivity and viscosity, and thus excellent or suitable performance may be achieved and lithium ions may move effectively or suitably.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a (e.g., any suitable) combination thereof on a surface (e.g., one surface or both surfaces (e.g., two opposite (opposite facing) surfaces)) of the porous substrate.

The porous substrate may be a polymer film formed or composed of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (PTFE; e.g., Teflon^{™}), or a copolymer or mixture of two or more thereof.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide and a second structural unit including at least one selected from a structural unit derived from (meth)acrylic acid or (meth)acrylate and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a (e.g., any suitable) combination thereof, but embodiments of the present disclosure are not limited thereto. An average particle diameter (D₅₀) of the inorganic particles may be in a range of about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

The thickness of the coating layer may be in a range of about 0.5 µm to about 20 µm, for example, about 1 µm to about 10 µm or about 1 µm to about 5 µm.

Examples and Comparative Examples of the present invention are described herein. However, the following examples are only examples of the present disclosure, and embodiments of the present disclosure are not limited to the following examples.

### Examples

### Example 1

Ni_{0.91}Co_{0.075}Al_{0.015}(OH)₂ and LiOH were mixed in a molar ratio of 1:1.03 and subjected to a first heat treatment at 775 °C for 15 hours in an oxygen atmosphere to prepare a lithium nickel composite oxide in the form of secondary particles having a composition of Li_{1.03}Ni_{0.91}Co_{0.075}Al_{0.015}O₂ and an average particle size (D₅₀) of approximately 14 µm.

The prepared lithium nickel-based composite oxide was measured with respect to residual lithium in an HCl titration method, wherein Li₂CO₃ and LiOH contents (e.g., amounts) were calculated from Equivalence Point 1 (EP1) and Equivalence Point 2 (EP2) according to the injection of HCl, and the total residual lithium was calculated from EP2.

As a result, LiOH was confirmed to be 16,370 ppm (1.637 wt%), Li₂CO₃ was confirmed to be 8,500 ppm (0.85 wt%), and the residual lithium was confirmed to be 6,350 ppm (0.635 wt%).

In a 1 L reactor, 500 g of the prepared lithium nickel-based composite oxide and 600 g of distilled water were added thereto for 10 seconds and then, stirred for 30 minutes, preparing a first mixed solution. The first mixed solution was measured to have pH 13, and HCl was added to the first mixed solution to adjust the pH of the first mixed solution to 7.0. Subsequently, aluminium sulfate was added to the first mixed solution and then, stirred at about 350 rpm for about 5 minutes for salt-dissolution, preparing a second mixed solution. Herein, an aluminium content (e.g., amount) in the aluminium sulfate was designed to be 1.0 mol% based on 100 mol% of a total metal excluding lithium (e.g., based on a total of 100 mol% of metal excluding lithium) in a lithium nickel-based composite oxide and aluminum of the aluminum sulfate. After completing the stirring, a supernatant of the second mixed solution was confirmed to have pH 7. Subsequently, after removing the solvent from the second mixed solution by using an aspirator and a filter press, a dried product was obtained therefrom through vacuum drying at 190 °C.

### Comparative Example 1

A dried product was prepared in substantially the same manner as in Example 1 except that the addition HCl to the first mixed solution to adjust pH of the first mixed solution to 7.0 was not performed.

### Comparative Example 2

A dried product was prepared in substantially the same manner as in Example 1 except that the lithium nickel-based composite oxide of Example 1 was used but dry-coated with aluminium oxide.

For example, the lithium nickel-based composite oxide of Example 1 and the aluminium oxide were mixed and then, heat-treated at 710 °C for 13 hours under an oxygen atmosphere to perform, and form, the aluminium coating. Herein, an aluminium content (e.g., amount) of the aluminium oxide was designed to be 1.0 mol% based on 100 mol% of a total metal excluding lithium (e.g., based on a total of 100 mol% of metal excluding lithium) in the lithium nickel-based composite oxide and aluminum of the aluminum oxide.

### Comparative Example 3

A dried product was prepared in substantially the same manner as in Example 1 except that the lithium nickel-based composite oxide of Example 1 was used, but an aluminium sulfate solution was prepared to perform pre-addition-wet coating in which the lithium nickel-based composite oxide was added to the aluminium sulfate solution without any pH adjustment step.

For example, 600 g of distilled water and aluminium sulfate were placed in a 1 L reactor and then, stirred at about 350 rpm for about 5 minutes for salt-dissolution to prepare a coating solution. It was confirmed that the salt was completely dissolved in the coating solution, which was colorless and transparent. While continuously stirring the coating solution, 500 g of the lithium nickel-based composite oxide was added thereto for 1.5 minute and then, stirred for 30 minutes. Herein, an aluminium content (e.g., amount) in the aluminium sulfate was designed to be 1.0 mol% based on 100 mol% of a total metal excluding lithium (e.g., based on a total of 100 mol% of metal excluding lithium) in the lithium nickel-based composite oxide and aluminum of the aluminum sulfate. After the stirring, a supernatant thereof was confirmed to have pH 12.

After removing the solvent from the mixed solution with an aspirator and a filter press, the coated product was obtained through vacuum-drying at 190 °C.

### Comparative Example 4

The lithium nickel-based composite oxide of Example 1 was used as is without any other steps or processes having been performed on it.

### Evaluation Example 1: Analysis of Surface of Positive Electrode Active Material

The dried products of the Example and Comparative Examples were compared through scanning electron microscopy (SEM). SEM was performed by using Helios G4 HX under the conditions of HT: 3 kV, current: 0.8 nA, and live time: 90s.

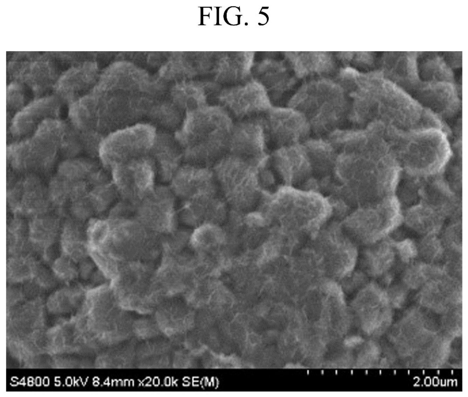

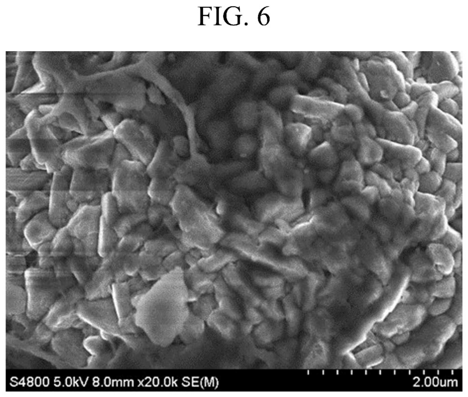

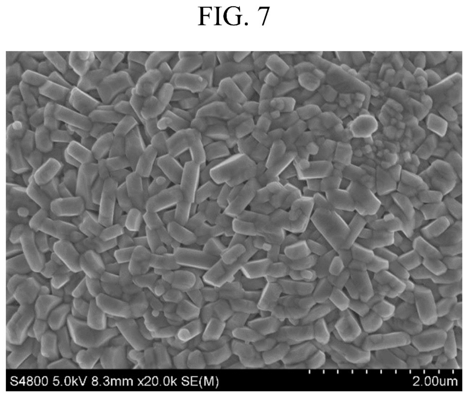

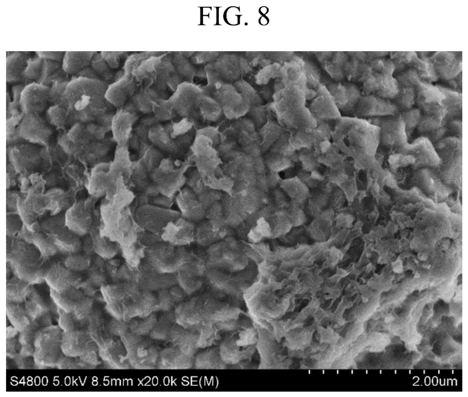

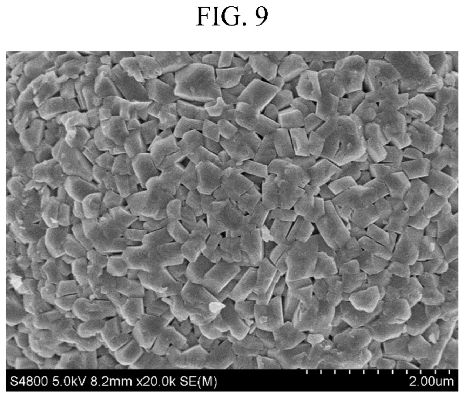

FIG. 5 is a SEM image of the surface of a dried product according to Example 1. FIG. 6 is a SEM image of the surface of a dried product according to Comparative Example 1. FIG. 7 is a SEM image of the surface of a dried product according to Comparative Example 2. FIG. 8 is a SEM image of the surface of a dried product according to Comparative Example 3. FIG. 9 is a SEM image of the surface of a lithium nickel-based composite oxide according to Comparative Example 4.

Referring to FIGS. 5 to 9, on the surface of the dried product according to Example 1, it was confirmed that a substantially uniform mesh-like or spider web-like aluminium coating layer was formed, but on the surface of the dried product according to Comparative Example 1, in which pH of the first mixed solution was not adjusted, it was confirmed that a substantially non-uniform coating layer was formed. Also, on the surface of the dried product according to Comparative Example 2, in which the dry coating was performed, on the surface of the dried product according to Comparative Example 3, in which the pre-addition-wet coating was performed, and on the surface of the lithium nickel-based composite oxide with no coating layer according to Comparative Example 4, it was confirmed that the coating layer was all unevenly formed.

### Evaluation Example 2: Analysis of Cross-Section of Positive Electrode Active Material

The dried products according to the Example and Comparative Examples were cut by a focused ion beam (FIB) to perform SEM-EDS mapping of their cross-sections, through which aluminium coating states were checked. SEM-EDS was performed by using Helios G4 HX under the conditions of HT: 3 kV, a current: 0.8 nA, and live time: 90s.

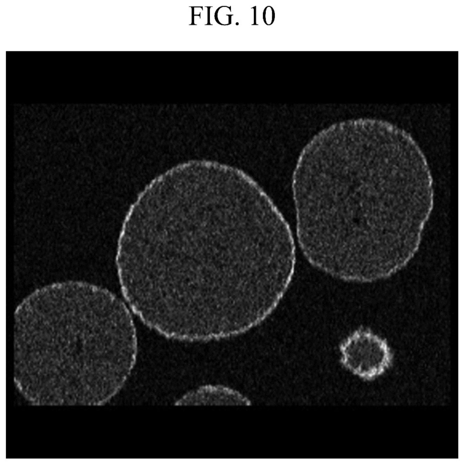

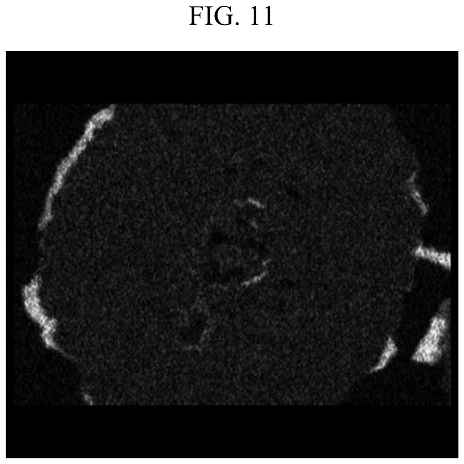

FIG. 10 is a scanning electron microscopy with energy dispersive X-ray spectroscopy (SEM-EDS) image of aluminium in a cross-section of a dried product prepared in Example 1, and FIG. 11 is a SEM-EDS image of aluminium in a cross-section of a dried product prepared in Comparative Example 1.

Referring to FIGS. 10 and 11, through the cross-section of the dried product of Example 1, in which the aluminium post-addition wet coating was preceded by adjusting the pH, an aluminium coating layer was confirmed to be distinctly formed on the surface of the particles. In contrast, the cross-section of the dried product of Comparative Example 1, in which the aluminium post-addition wet coating proceeded without adjusting the pH, the aluminium coating layer was confirmed to be unevenly formed.

### Evaluation Example 3: Analysis of Aluminium Content on Surface of Positive Electrode Active Material

An aluminium content (e.g., amount) on the surface of the dried products of the Example and Comparative Examples was analyzed through energy profiling energy dispersive spectroscopy (EP-EDS), and the results are shown in Table 1. EP-EDS was performed by using Ultim (100 mm² detector) under the conditions of HT: 3 kV, current: 0.8 nA, and live time: 90s.

### Evaluation Example 4: ICP Composition

The dried products prepared in the Example and Comparative Examples were measured with respect to Cl, Na, and S contents (e.g., amounts) through inductively coupled plasma (ICP) spectroscopy, and the results are shown in Table 1.

**Table 1**

| | Al coating method | Al/(Ni+Co+Al) (at%) | ICP composition (ppm) | | |
|---|---|---|---|---|---|
| | | | Cl | Na | S |
| Ex. 1 | wet (salt-dissolution, post-addition, pH adjustment) | 41.2 | 1100 | 270 | 1200 |
| Comp. Ex. 1 | wet (salt-dissolution, post-addition, no pH adjustment) | 35.4 | 20 | 280 | 1260 |
| Comp. Ex. 2 | dry | - | - | - | - |
| Comp. Ex. 3 | wet (salt-dissolution, pre-addition) | 37.5 | 21 | 270 | 1250 |
| Comp. Ex. 4 | no coating | 5.2 | 20 | 70 | 80 |

Referring to Table 1, on the surface of the dried product of Example 1, in which the aluminium post-addition wet coating was preceded by adjusting the pH, the aluminium content (e.g., amount) based on a total of 100 at% of nickel, cobalt, and aluminium was higher than on the surface of the dried product of Comparative Example 1, in which the aluminium post-addition wet coating proceeded without adjusting the pH. The aluminium content (e.g., amount) ) based on a total of 100 at% of nickel, cobalt, and aluminium was also higher than on the surface of the dried product of Comparative Example 2, in which the dry coating proceeded, higher than on the surface of the dried product of Comparative Example 3, in which the aluminium pre-addition wet coating proceeded, and higher than on the surface of the dried product of Comparative Example 4, in which there was no coating.

Also, in Example 1, in which the aluminium post-addition wet coating was preceded by adjusting the pH, the chlorine content (e.g., amount) was greater than or equal to 0.1 wt% based on 100 wt% of the total dried product of Example 1 (e.g., based on a total of 100 wt% of the dried product of Example 1), but in Comparative Example 1, in which the aluminium post-addition wet coating proceeded without adjusting the pH, Comparative Example 2, in which the dry coating proceeded, Comparative Example 3, in which the aluminium pre-addition wet coating proceeded, and Comparative Example 4, in which there was no coating, it was confirmed that the chlorine content (e.g., amount) was less than 0.1 wt% based on 100 wt% of the total coating product or the lithium nickel-based composite oxide.

The results of Evaluation Examples 1 through 4 collectively demonstrate that the method of aluminium post-addition wet coating with pH adjustment, as employed, e.g., in Example 1, provides a distinct advantage in forming a uniform and stable aluminium coating layer on the surfaces of lithium nickel-based composite oxide particles. This uniformity is confirmed through both surface and cross-sectional SEM and SEM-EDS analyses, and is further supported by quantitative EP-EDS and ICP measurements showing higher a aluminium content and a chlorine content of at least 0.1 wt%. These structural and compositional features directly correlate with improved electrochemical performance, including enhanced initial capacity, charge/discharge efficiency, and high-temperature cycle life, as described in the preceding sections. Accordingly, the disclosed method offers a robust and reproducible approach for producing high-performance positive electrode active materials.

A battery manufacturing device, a battery management system (BMS) device, and/or any other relevant devices or components according to one or more embodiments of the present disclosure may be implemented utilizing any suitable hardware, firmware (e.g., an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device utilizing a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely,.

While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the scope of the appended claims and equivalents thereof. It therefore will be understood that one or more embodiments described herein are just illustrative but not limitative in all aspects.

Embodiments are set out in the following clauses:
Clause 1. A method for preparing a positive electrode active material, the method comprising: (i) preparing core particles comprising a lithium nickel-based composite oxide; (ii) adding the core particles to an aqueous solvent, mixing the core particles and the aqueous solvent to prepare a first mixed solution, and adjusting the pH of the first mixed solution to a range between 5.5 and 7.5; (iii) adding an aluminium raw material to the first mixed solution and mixing the aluminium raw material and the first mixed solution to prepare a second mixed solution; and (iv) removing the aqueous solvent from the second mixed solution to prepare a dried product.
Clause 2. The method of Clause 1, wherein the lithium nickel-based composite oxide is represented by Chemical Formula 2:

   **Chemical Formula 2** Liₐ₂Niₓ₂M3_{y2}M4_{z2}O_{2-b2}X_{b2}

   wherein, in Chemical Formula 2, 0.9≤a2≤1.8, 0.8≤x2≤1, 0≤y2≤0.2, 0≤z2≤0.2, 0.9≤x2+y2+z2≤1.1, 0≤b2≤0.1, M3 and M4 are each independently one or more elements selected from among Al, B, Ba, Ca, Ce, Co, Cr, Cu, Fe, Mg, Mn, Mo, Nb, Si, Sn, Sr, Ti, Y, V, W, Zn, and Zr, M3 and M4 are different elements from each other, and X is one or more elements selected from among F, P, and S.
Clause 3. The method of Clause 1 or Clause 2, wherein, in the lithium nickel-based composite oxide, the nickel content is greater than or equal to 80 mol%, based on a total of 100 mol% of metal excluding lithium.
Clause 4. The method of any of Clauses 1 to 3, wherein, in the lithium nickel-based composite oxide, a cobalt content is less than or equal to 8 mol%, based on a total of 100 mol% of metal excluding lithium.
Clause 5. The method of any preceding Clause, wherein, based on a total of 100 wt% of the core particles: an amount of LiOH on surfaces of the core particles is in a range of 1.0 wt% to 2.0 wt%; and an amount of Li₂CO₃ on surfaces of the core particles is in a range of 0.6 wt% to 1.0 wt%.
Clause 6. The method of any preceding Clause, wherein, in step (ii), the adjusting of pH of the first mixed solution is performed by utilizing an acidic aqueous solution.
Clause 7. The method of Clause 6, wherein the acidic aqueous solution is hydrochloric acid (HCl).
Clause 8. The method of any preceding Clause, wherein the aluminium raw material is aluminium sulfate, aluminium nitrate, or a combination thereof.
Clause 9. The method of any preceding Clause, wherein the pH of a supernatant of the second mixed solution is in a range of 5.5 to 7.5.
Clause 10. The method of any preceding Clause, wherein a surface of the dried product is in a shape of a spider web or a mesh.
Clause 11. The method of any preceding Clause, wherein an aluminium content is in a range of 35 at% to 45 at%, based on a total of 100 at% of a total metal excluding lithium, as measured by energy profiling energy dispersive spectroscopy (EP-EDS) on a surface of the dried product.
Clause 12. The method of any preceding Clause, wherein a chlorine content is greater than or equal to 0.1 wt%, based on a total of 100 wt% of the dried product.
Clause 13. The method of any preceding Clause, further comprising a step of heat-treating the dried product after the step (iv).
Clause 14. A positive electrode active material prepared by the method of any one of Clauses 1 to 13.
Clause 15. A positive electrode active material comprising: core particles comprising a lithium nickel-based composite oxide; and a coating layer on a surface of a core particle, the coating layer comprising aluminium, wherein an aluminium content is in a range of 35 at% to 45 at%, based on a total of 100 at% of a total metal excluding lithium, as measured by energy profiling energy dispersive spectroscopy (EP-EDS) on a surface of the positive electrode active material, and wherein a chlorine content is greater than or equal to 0.1 wt%, based on a total of 100 wt% of the positive electrode active material.
Clause 16. The positive electrode active material of Clause 15, wherein the lithium nickel-based composite oxide is represented by Chemical Formula 2:

   **Chemical Formula 2** Liₐ₂Niₓ₂M3_{y2}M4_{z2}O_{2-b2}X_{b2}

   wherein, in Chemical Formula 2, 0.9≤a2≤1.8, 0.8≤x2≤1, 0≤y2≤0.2, 0≤z2≤0.2, 0.9≤x2+y2+z2≤1.1, 0≤b2≤0.1, M3 and M4 are each independently one or more elements selected from among Al, B, Ba, Ca, Ce, Co, Cr, Cu, Fe, Mg, Mn, Mo, Nb, Si, Sn, Sr, Ti, Y, V, W, Zn, and Zr, M3 and M4 are different elements from each other, and X is one or more elements selected from among F, P, and S.
Clause 17. The positive electrode active material of Clause 15 or Clause 16, wherein, in the lithium nickel-based composite oxide, a nickel content is greater than or equal to 80 mol%, based on a total of 100 mol% of metal excluding lithium.
Clause 18. The positive electrode active material of any one of Clauses 15 to 17, wherein, in the lithium nickel-based composite oxide, a cobalt content is less than or equal to 8 mol%, based on a total of 100 mol% of metal excluding lithium.
Clause 19. A positive electrode comprising: a current collector, and a positive electrode active material layer on the current collector, wherein the positive electrode active material layer comprises the positive electrode active material of Clause 14 or any one of Clauses 15 to 18.
Clause 20. A rechargeable lithium battery comprising: the positive electrode of Clause 19; a negative electrode; and an electrolyte.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A method for preparing a positive electrode active material, the method comprising:
(i) preparing core particles comprising a lithium nickel-based composite oxide;
(ii) adding the core particles to an aqueous solvent, mixing the core particles and the aqueous solvent to prepare a first mixed solution, and adjusting the pH of the first mixed solution to a range between 5.5 and 7.5;
(iii) adding an aluminium raw material to the first mixed solution and mixing the aluminium raw material and the first mixed solution to prepare a second mixed solution; and
(iv) removing the aqueous solvent from the second mixed solution to prepare a dried product.

2. The method as claimed in claim 1, wherein the lithium nickel-based composite oxide is represented by Chemical Formula 2:
**Chemical Formula 2** Liₐ₂Niₓ₂M3_{y2}M4_{z2}O_{2-b2}X_{b2}
wherein, in Chemical Formula 2, 0.9≤a2≤1.8, 0.8≤x2≤1, 0≤y2≤0.2, 0≤z2 ≤0.2, 0.9≤ x2+y2+z2 ≤ 1.1, 0≤b2≤0.1, M3 and M4 are each independently one or more elements selected from among Al, B, Ba, Ca, Ce, Co, Cr, Cu, Fe, Mg, Mn, Mo, Nb, Si, Sn, Sr, Ti, Y, V, W, Zn, and Zr, M3 and M4 are different elements from each other, and X is one or more elements selected from among F, P, and S.

3. The method as claimed in claim 1 or claim 2, wherein, in the lithium nickel-based composite oxide,
the nickel content is greater than or equal to 80 mol%, based on a total of 100 mol% of metal excluding lithium, and/or
a cobalt content is less than or equal to 8 mol%, based on a total of 100 mol% of metal excluding lithium, and/or
a chlorine content is greater than or equal to 0.1 wt%, based on a total of 100 wt% of the dried product.

4. The method as claimed in any preceding claim, wherein, based on a total of 100 wt% of the core particles:
an amount of LiOH on surfaces of the core particles is in a range of 1.0 wt% to 2.0 wt%; and
an amount of Li₂CO₃ on surfaces of the core particles is in a range of 0.6 wt% to 1.0 wt%.

5. The method as claimed in any preceding claim, wherein, in step (ii),
the adjusting of pH of the first mixed solution is performed by utilizing an acidic aqueous solution
optionally wherein the acidic aqueous solution is hydrochloric acid (HCl).

6. The method as claimed in any preceding claim, wherein the aluminium raw material is aluminium sulfate, aluminium nitrate, or a combination thereof.

7. The method as claimed in any preceding claim, wherein the pH of a supernatant of the second mixed solution is in a range of 5.5 to 7.5.

8. The method as claimed in any preceding claim, wherein a surface of the dried product is in a shape of a spider web or a mesh.

9. The method as claimed in any preceding claim, wherein an aluminium content is in a range of 35 at% to 45 at%, based on a total of 100 at% of a total metal excluding lithium, as measured by energy profiling energy dispersive spectroscopy (EP-EDS) on a surface of the dried product..

10. The method as claimed in any preceding claim, further comprising a step of heat-treating the dried product after step (iv).

11. A positive electrode active material prepared by the method as claimed in any one of claims 1 to 10.

12. A positive electrode active material comprising:
core particles comprising a lithium nickel-based composite oxide; and
a coating layer on a surface of a core particle, the coating layer comprising aluminium,
wherein an aluminium content is in a range of 35 at% to 45 at%, based on a total of 100 at% of a total metal excluding lithium, as measured by energy profiling energy dispersive spectroscopy (EP-EDS) on a surface of the positive electrode active material, and
wherein a chlorine content is greater than or equal to 0.1 wt%, based on a total of 100 wt% of the positive electrode active material.

13. The positive electrode active material as claimed in claim 12, wherein the lithium nickel-based composite oxide is represented by Chemical Formula 2:
**Chemical Formula 2** Liₐ₂Niₓ₂M3_{y2}M4_{z2}O_{2-b2}X_{b2}
wherein, in Chemical Formula 2, 0.9≤a2≤1.8, 0.8≤x2≤1, 0≤y2≤0.2, 0≤z2 ≤ 0.2, 0.9≤x2+y2+z2≤ 1.1, 0 ≤ b2≤0.1, M3 and M4 are each independently one or more elements selected from among Al, B, Ba, Ca, Ce, Co, Cr, Cu, Fe, Mg, Mn, Mo, Nb, Si, Sn, Sr, Ti, Y, V, W, Zn, and Zr, M3 and M4 are different elements from each other, and X is one or more elements selected from among F, P, and S, and/or
wherein, in the lithium nickel-based composite oxide, the nickel content is greater than or equal to 80 mol%, based on a total of 100 mol% of metal excluding lithium, and/or
wherein, in the lithium nickel-based composite oxide, a cobalt content is less than or equal to 8 mol%, based on a total of 100 mol% of metal excluding lithium.

14. A positive electrode comprising:
a current collector, and
a positive electrode active material layer on the current collector,
wherein the positive electrode active material layer comprises the positive electrode active material as claimed in claim 11 or any one of claims 12 to 14.

15. A rechargeable lithium battery comprising:
the positive electrode as claimed in claim 14;
a negative electrode; and
an electrolyte.
